# EUROPEAN PATENT SPECIFICATION

(11) **EP 3 361 302 B1**
(45) Date of publication and mention of the grant of the patent: **04.09.2024**
(21) Application number: 16853267.9
(22) Date of filing: 05.10.2016
(51) Int. Cl.: G02B 21/14, G01N 21/27, G02B 21/34, G02B 27/52, G02B 21/08, G02B 21/36

(54) **MICROSCOPE DEVICE AND IMAGE-FORMING METHOD**
MIKROSKOPVORRICHTUNG UND BILDERZEUGUNGSVERFAHREN
DISPOSITIF DE MICROSCOPE ET PROCÉDÉ DE FORMATION D'IMAGE

(30) Priority: 07.10.2015 JP 2015199061
(43) Date of publication of application: 15.08.2018
(73) Proprietor: FUJIFILM Corporation, Tokyo 106-8620 (JP)
(72) Inventor: WAKUI, Takashi, Kanagawa 258-8538 (JP)
(74) Representative: Klunker IP Patentanwälte PartG mbB
(86) International application number: PCT/JP2016/004476
(87) International publication number: WO 2017/061110

(56) References cited:
- GB-A- 648 801
- JP-A- 2003 121 749
- JP-A- 2006 512 620
- JP-A- 2011 007 598
- JP-A- 2011 248 278
- JP-A- H04 254 815
- JP-A- H10 206 740
- US-A1- 2003 030 902
- US-A1- 2015 009 315

## Description

### Technical Field

The present invention relates to a microscope apparatus that takes a phase-contrast image by irradiating an object to be observed with illumination light for phase-contrast measurement.

### Related Art

In recent years, phase-contrast measurement has started to be widely used as a method of observing a cultured transparent cell, such as a stem cell, without staining. Further, a phase-contrast microscope is used as an apparatus for performing the phase-contrast measurement.

In a general phase-contrast microscope, an object to be observed is irradiated with ring-shaped illumination light and direct light passing through the object to be observed and diffracted light diffracted by the object to be observed are incident on a phase plate. Then, the direct light is dimmed by a ring portion of the phase plate, the phase of the direct light is shifted by the ring portion, the diffracted light passes through a transparent portion of the phase plate, and an image is formed with the direct light and the diffracted light. As a result, a phase-contrast image with contrast of light and darkness can be taken.

### Prior Art Documents

### Patent Documents

Patent Document 1: Japanese Patent Application Laid-Open (JP-A) No. 2012-222672
Patent Document 2: Japanese Patent Application Laid-Open (JP-A) No. 2008-139613
Patent Document 3: Japanese Patent Application Laid-Open (JP-A) No. 2015-082100

JP 2011 248278 A discloses a phase-dispersion microscope comprising: a light source that delivers illuminating light; an aperture stop having an opening; a condenser lens that converts the delivered light into parallel light; a stage for placing a sample; an object lens that collects light transmitting through the sample; and a phase plate conjugate to the aperture stop for restricting the light passing through the object lens. The phase plate has a phase modulation section that alters the phase of the light and amount of the light. The light transmittance of the phase modulation section is 0.05 or less.

Another phase contrast microscope is disclosed in US 2003/30902 A1.

### SUMMARY

Here, in the phase-contrast image taken by the phase-contrast microscope, the contrast of the outline of a cell and the like can be emphasized but the color of the cell may not be clearly shown.

For example, there is a case where alkaline phosphatase as a pluripotent marker is added to an induced pluripotent stem (iPS) cell, and the undifferentiated state of the iPS cell is checked through the observation of the color of the iPS cell. In this case, it may be difficult to recognize a change in the color of the iPS cell in only the phase-contrast image that is taken by the phase-contrast microscope.

That is, an image in which a change in the color of a cell can be observed and the contrast of the outline of the cell can be clearly observed could not be taken by the phase-contrast microscope in the related art, and such an image also could not be taken by a bright-field microscope, and the like.

Patent Document 1 and Patent Document 2 disclose microscopes that can take a phase-contrast image and can also take a bright-field image, but these microscopes also cannot take an image in which both color and contrast are clear.

Further, Patent Document 3 discloses a microscope that performs oblique illumination observation, but this microscope also cannot take an image in which both color and contrast are clear.

The invention has been made in consideration of the above-mentioned problems, and an object of the invention is to provide a microscope apparatus and an image forming method that can take an image in which both the color and the contrast of an object to be observed, such as a cell, are clear.

A microscope apparatus of the invention is defined in claim 1. The microscope apparatus comprises: an illumination light irradiation unit that irradiates an object to be observed with illumination light for phase-contrast measurement; a transmission type display unit on which light, which is transmitted through the object to be observed due to irradiation with the illumination light for phase-contrast measurement, is incident; and an imaging unit that images the object to be observed by detecting the light transmitted through the transmission type display unit. The transmission type display unit displays patterns where transmission density varies for every light having a plurality of wavelengths included in the light transmitted through the object to be observed.

Here, the light having a plurality of wavelengths means a plurality of pieces of light having different spectra.

Further, in the microscope apparatus of the invention, the transmission type display unit may display the patterns, which correspond to the every light having the plurality of wavelengths, at different positions, respectively.

Furthermore, in the microscope apparatus of the invention, the transmission type display unit may display the patterns, which correspond to the every light having the plurality of wavelengths, in the shape of a concentric circle.

Moreover, in the microscope apparatus of the invention, the transmission type display unit may display a pattern where transmission density of light having a relatively short wavelength is higher than transmission density of light having a relatively long wavelength.

Further, in the microscope apparatus of the invention, the transmission type display unit may display a pattern where transmission density of blue light is higher than transmission densities of red light and green light.

The microscope apparatus of the invention may further comprise a wavelength-selection receiving unit that receives selection of light having a wavelength allowing transmission density to be relatively high, and the transmission type display unit may change the transmission density of light, which has each of the wavelengths of the patterns, according to the light having the wavelength received by the wavelength-selection receiving unit.

Further, in the microscope apparatus of the invention, red light, green light, and blue light may be used as the light having the plurality of wavelengths.

Furthermore, in the microscope apparatus of the invention, the transmission type display unit may switch a phase-contrast observation mode in which the patterns are displayed and a bright-field observation mode in which the patterns are not displayed.

Moreover, in the microscope apparatus of the invention, the transmission type display unit may display a pattern that blocks light having all wavelengths included in the illumination light for phase-contrast measurement in a case of the phase-contrast observation mode.

Further, in the microscope apparatus of the invention, it is preferable that the pattern is a ring-shaped pattern.

The microscope apparatus of the invention may further comprise a phase changing unit on which light, which is transmitted through the object to be observed due to irradiation with the illumination light for phase-contrast measurement, is incident and which shifts a phase of the incident light.

An image forming method of the invention is defined in claim 12. The image forming method comprises: irradiating an object to be
observed with illumination light for phase-contrast measurement; allowing light, which is transmitted through the object to be observed due to irradiation with the illumination light for phase-contrast measurement, to be incident on a transmission type display unit; allowing the transmission type display unit to display patterns where transmission density varies for every light having a plurality of wavelengths included in the light transmitted through the object to be observed; and imaging the object to be observed by detecting the light that is transmitted through the transmission type display unit on which the pattern is displayed.

According to the microscope apparatus of the invention, light, which is transmitted through the object to be observed due to irradiation with the illumination light for phase-contrast measurement, is allowed to be incident on a transmission type display unit; the transmission type display unit is allowed to display patterns where transmission density varies for every light having a plurality of wavelengths included in the light transmitted through the object to be observed; and the light, which is transmitted through the transmission type display unit on which the pattern is displayed, is detected. Accordingly, since the direct light of light having a wavelength where transmission density is relatively high is dimmed by the pattern, the same action as the dimming action of phase-contrast observation can be obtained. That is, a phase-contrast image in which contrast between image-forming light, which is caused by interference between the direct light of the light having the wavelength and diffracted light, and the direct light is emphasized can be acquired. On the other hand, since light having a wavelength where transmission density is relatively low is not dimmed by the pattern, the same action as general bright-field observation can be obtained. Accordingly, a bright-field image including the light, which has the wavelength, as a main component can be acquired.

That is, since the light transmitted through the transmission type display unit is detected, an image, which has both the characteristics of the phase-contrast image and the characteristics of the bright-field image, can be taken. Accordingly, an image in which both the color and the contrast of the object to be observed, such as a cell, are clear can be taken.

The same effects as the microscope apparatus of the invention can also be obtained in the image forming method of the invention.

### BRIEF DESCRIPTION OF THE DRAWINGS

Fig. 1 is a diagram showing the schematic structure of a microscope system that uses an embodiment of a microscope apparatus of the invention.
Fig. 2 is a diagram showing an example of the structure of a slit plate.
Fig. 3 is a diagram showing an example of a red adjustment pattern, a green adjustment pattern, and a blue adjustment pattern that are displayed on a transmission type display unit.
Fig. 4 is a diagram showing an example of the structure of a phase plate.
Fig. 5A is a diagram showing an example of patterns that are displayed on the transmission type display unit.
Fig. 5B is a diagram showing an example of patterns that are displayed on the transmission type display unit.
Fig. 5C is a diagram showing an example of patterns that are displayed on the transmission type display unit.
Fig. 5D is a diagram showing an example of patterns that are displayed on the transmission type display unit.
Fig. 5E is a diagram showing an example of patterns that are displayed on the transmission type display unit.
Fig. 5F is a diagram showing an example of patterns that are displayed on the transmission type display unit.
Fig. 6 is a flowchart illustrating the action of the microscope system that uses the embodiment of the microscope apparatus of the invention.

### DETAILED DESCRIPTION

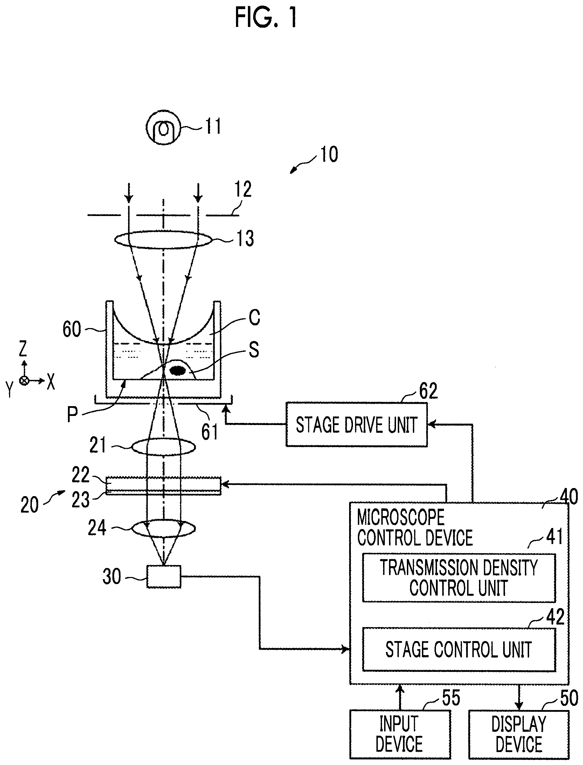

A microscope system, which uses an embodiment of a microscope apparatus of the invention, will be described in detail below with reference to the drawings. Fig. 1 is a diagram showing the schematic structure of the microscope system of this embodiment.

As shown in Fig. 1, the microscope system of this embodiment includes an illumination light irradiation unit 10, an image-forming optical system 20, an imaging unit 30, a microscope control device 40, a display device 50, and an input device 55. A stage 61 is provided between the illumination light irradiation unit 10 and the image-forming optical system 20, and a culture vessel 60 in which an object S to be observed is received is installed on the stage 61. The stage 61 is moved in an X direction and a Y direction, which are orthogonal to each other, by a stage drive unit 62. The X direction and the Y direction are directions that are orthogonal to each other on a plane parallel to the installation surface of the culture vessel 60 for the object S to be observed.

In the microscope system of this embodiment, the illumination light irradiation unit 10, the image-forming optical system 20, the imaging unit 30, the stage 61, and the stage drive unit 62 form a phase-contrast microscope apparatus and the microscope control device 40 controls the phase-contrast microscope apparatus. The specific structure of the phase-contrast microscope apparatus will be described below.

The illumination light irradiation unit 10 irradiates the object S to be observed, which is received in the culture vessel 60, with so-called illumination light for phase-contrast measurement, and irradiates the object S to be observed with ring-shaped illumination light as the illumination light for phase-contrast measurement in this embodiment. Specifically, the illumination light irradiation unit 10 of this embodiment includes a white light source 11 that emits white light, a slit plate 12 on which white light emitted from the white light source 11 is incident and which includes a ring-shaped slit and emits ring-shaped illumination light, and a first objective lens 13 on which ring-shaped illumination light emitted from the slit plate 12 is incident and which irradiates the object S to be observed with the incident ring-shaped illumination light.

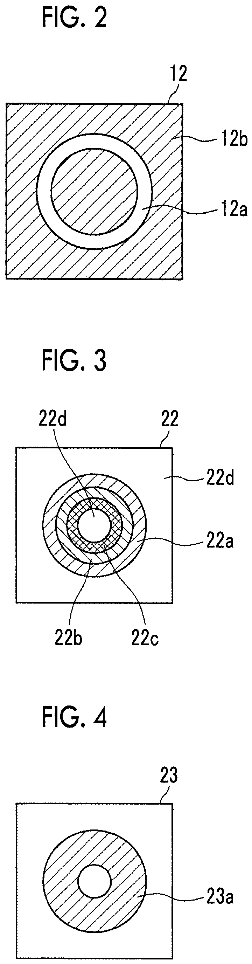

Fig. 2 is a diagram showing the specific structure of the slit plate 12. As shown in Fig. 2, the slit plate 12 is a plate where a ring-shaped slit 12a through which white light passes is formed at a light screen 12b blocking white light emitted from the white light source 11, and ring-shaped illumination light is formed since the white light passes through the slit 12a.

The ring-shaped illumination light is formed in this embodiment using the slit plate 12 as described above. However, a method of forming the ring-shaped illumination light is not limited thereto, and the ring-shaped illumination light may be formed using, for example, a spatial light modulation element or the like.

Further, the ring-shaped illumination light is employed in this embodiment as the illumination light for phase-contrast measurement. However, illumination light having a structure other than the shape of a ring may be employed, or the illumination light has other shapes, such as a triangular shape and a quadrangular shape, as long as the illumination light has a shape conjugated with a phase plate to be described later.

The culture vessel 60, which is installed on the stage 61, is made of a resin that is transparent to white light, glass, or the like. For example, a petri dish, a dish, a well plate, and the like can be used as the culture vessel 60. Further, a cell group, and the like are disposed on the bottom of the culture vessel 60 as the object S to be observed. Examples of the cell group as the object to be observed include: pluripotent stem cells, such as an iPS cell and an embryonic stem (ES) cell; cells of the nerves, the skin, the cardiac muscles, and the liver that are differentiated and induced from stem cells; cells of the skin, the retina, the cardiac muscles, the blood cells, the nerves, and the organs that are obtained from a human body; and the like. A culture medium C, which is used to culture the cell group, is also received in the culture vessel 60.

The image-forming optical system 20 includes a second objective lens 21, a transmission type display unit 22, a phase plate 23, and an image-forming lens 24.

The second objective lens 21 is moved in a Z direction by a lens drive unit (not shown). Autofocus control is performed by the movement of the second objective lens 21 in the Z direction, so that the contrast of an image taken by the imaging unit 30 is adjusted.

Light, which is transmitted through the object S to be observed and is condensed by the second objective lens 21, is incident on the transmission type display unit 22. Specifically, the transmission type display unit 22 is formed of a transmission type liquid crystal display that transmits white light and can display a color image. Further, the transmission type display unit 22 displays patterns where transmission density varies for every light having a plurality of wavelengths included in the light transmitted through the object S to be observed. A transmission type liquid crystal display is used as the transmission type display unit 22 in this embodiment, but other transmission type displays, such as a transmission type organic EL display, may be used.

Specifically, as shown in Fig. 3, the transmission type display unit 22 of this embodiment displays a red adjustment pattern 22a that adjusts the transmission density of red light, a green adjustment pattern 22b that adjusts the transmission density of green light, and a blue adjustment pattern 22c that adjusts transmission density of blue light. Nothing is displayed in a range 22d of the transmission type display unit 22 other than the red adjustment pattern 22a, the green adjustment pattern 22b, and the blue adjustment pattern 22c, and the range 22d is transparent to light that has all wavelengths included in the light transmitted through the object S to be observed.

The red adjustment pattern 22a is a pattern that is used to adjust the transmission density of red light of the light transmitted through the object S to be observed, and is displayed with a color that absorbs red light. Specifically, the red adjustment pattern 22a is, for example, a green or blue-green pattern that absorbs a red light.

The green adjustment pattern 22b is a pattern that is used to adjust the transmission density of green light of the light transmitted through the object S to be observed, and is displayed with a color that absorbs green light. Specifically, the green adjustment pattern 22b is, for example, a green or red-purple pattern that absorbs a green light.

The blue adjustment pattern 22c is a pattern that is used to adjust the transmission density of blue light of the light transmitted through the object S to be observed, and is displayed with a color that absorbs blue light. Specifically, the blue adjustment pattern 22c is, for example, a yellow pattern that absorbs a blue light.

Further, red adjustment pattern 22a, the green adjustment pattern 22b, and the blue adjustment pattern 22c are displayed in the shape of a concentric circle as shown in Fig. 3; and the red adjustment pattern 22a is displayed on the outermost side, the blue adjustment pattern 22c is displayed on the innermost side, and the green adjustment pattern 22b is displayed between the red adjustment pattern 22a and the blue adjustment pattern 22c.

The transmission type display unit 22 is disposed at a position optically conjugated with the above-mentioned slit plate 12, and the shape of each of the red adjustment pattern 22a, the green adjustment pattern 22b, and the blue adjustment pattern 22c also corresponds to the shape of the slit 12a of the slit plate 12.

The reason why the red adjustment pattern 22a, the green adjustment pattern 22b, and the blue adjustment pattern 22c are displayed in the above-mentioned array is that red light, green light, and blue light are included in direct light transmitted through the object S to be observed but the methods of refraction of the light vary according to the wavelength of the light and the positions of portions of the transmission type display unit 22 irradiated with the red light, the green light, and the blue light vary. It is possible to more appropriately adjust the transmission density for each color light by displaying the respective patterns in the array shown in Fig. 3.

Returning to Fig. 1, the phase plate 23 is provided on the surface of the transmission type display unit 22 opposite to the object S to be observed. Fig. 4 is a plan view showing the specific structure of the phase plate 23. As shown in Fig. 4, the phase plate 23 is formed of a member, which is transparent to the wavelength of the ring-shaped illumination light, and includes a phase ring 23a.

The phase ring 23a is a phase film that shifts the phase of incident light by a quarter wavelength and is formed in the shape of a ring. Direct light incident on the phase plate 23 passes through the phase ring 23a, so that the phase of the direct light is shifted by a quarter wavelength. Since most of diffracted light, which is diffracted by the object S to be observed, passes through a portion of the phase plate 23 other than the phase ring 23a, the phase of most of the diffracted light is not changed. The phase ring 23a is formed in the range of the phase plate 23 corresponding to the range of the transmission type display unit 22 that displays the red adjustment pattern 22a, the green adjustment pattern 22b, and the blue adjustment pattern 22c; and is transparent to the wavelength of the ring-shaped illumination light.

Further, it is possible to obtain a phase-contrast image of the object S to be observed by the action of the absorption of light in the patterns that are displayed by the transmission type display unit 22 and the phase shift of light that is performed by the phase plate 23.

The action of general phase-contrast observation will be described here. In the general phase-contrast observation, it is possible to align the phase of the direct light with the phase of the diffracted light or to shift the phase of the direct light from the phase of the diffracted light by a half wavelength by shifting the phase of the direct light as described above. Accordingly, it is possible to further emphasize a change in the intensity of the diffracted light. Furthermore, it is possible to emphasize the contrast between image-forming light, which is caused by interference between the direct light and the diffracted light, and the image-forming light of the direct light by dimming the direct light. Accordingly, it is possible to form a phase-contrast image in which the structure and the like of the object to be observed are emphasized. However, there is a case where it is difficult for a change in the color of a phase-contrast image to be recognized in regard to the color of the object to be observed in the general phase-contrast observation since light having all wavelength components (colors) included in the direct light is dimmed.

In contrast, an image in which not only the contrast but also the color of the object to be observed is clear can be formed in this embodiment. An action for forming an image in a case in which the red adjustment pattern 22a is displayed on the transmission type display unit 22 will be described below.

In a case in which the red adjustment pattern 22a is displayed on the transmission type display unit 22, direct light, which has a red color component, of the light transmitted through the object S to be observed is dimmed by the red adjustment pattern 22a and the phase thereof is shifted by a quarter wavelength with the phase ring 23a. On the other hand, diffracted light having a red color component passes through portions other than the red adjustment pattern 22a and the phase ring 23a, and the intensity and phase thereof are not changed. Accordingly, it is possible to increase the intensity of the image-forming light that is caused by interference between the direct light having a red color component and the diffracted light having a red color component, and to increase the contrast between the image-forming light and the direct light. As a result, it is possible to form a phase-contrast image that includes a red color component as a main component.

On the other hand, since direct light, which has a green color component and a blue color component, of the light transmitted through the object S to be observed is not dimmed by the red adjustment pattern 22a, the contrast between the image-forming light and the direct light is not increased as much as that in the case of the light having a red color component but the same intensity as that in bright-field observation can be obtained. Accordingly, it is possible to form a bright-field image including a green color component and a blue color component as main components, that is, including light-blue light as a main component.

That is, the light, which is transmitted through the object S to be observed, passes through the transmission type display unit 22 and the phase plate 23, so that an image having characteristics of both a phase-contrast image including a red color component as a main component and a bright-field image including a light blue component as a main component can be formed. Accordingly, an image in which both the color and the contrast of an object to be observed, such as a cell, are clear can be formed.

The phase plate 23 of this embodiment corresponds to a phase changing unit of the invention. However, the structure of the phase changing unit is not limited to the above-mentioned structure, and the phase plate 23 may be switched according to the color of an adjustment pattern that is displayed on the transmission type display unit 22. Specifically, a phase plate including a phase ring for selectively shifting the phase of red light by a quarter wavelength may be used in a case in which the red adjustment pattern 22a is to be displayed on the transmission type display unit 22, a phase plate including a phase ring for selectively shifting the phase of green light by a quarter wavelength may be used in a case in which the green adjustment pattern 22b is to be displayed on the transmission type display unit 22, and a phase plate including a phase ring for shifting the phase of blue light by a quarter wavelength may be used in a case in which the blue adjustment pattern 22c is to be displayed on the transmission type display unit 22.

Further, a transmission type spatial light modulation element for changing a phase may be used instead of the phase plate 23. In this case, the transmission type spatial light modulation element may be controlled so as to shift the phase of the light by a quarter wavelength in regard to all the wavelengths of incident light, or the transmission type spatial light modulation element may be controlled according to a pattern displayed on the transmission type display unit 22 so as to select the wavelength of light of which the phase is shifted by a quarter wavelength.

Furthermore, the phase plate 23 is provided in this embodiment, but the phase plate 23 does not necessarily need to be provided. Even in this case, a phase-contrast image in which contrast is emphasized through dimming performed by the transmission type display unit 22 can be obtained. Moreover, the phase plate 23 may be provided in a case in which the contrast of, for example, a phase-contrast image is to be emphasized.

Further, in a case in which the phase plate 23 is not provided and the transmission type display unit 22 is formed of a transmission type liquid crystal display, the transmission type display unit 22 may be made to display the above-mentioned adjustment patterns and to shift the phase of incident light by a quarter wavelength.

The transmission type display unit 22 switches the display of a pattern according to the kind of an image that is desired by a user.

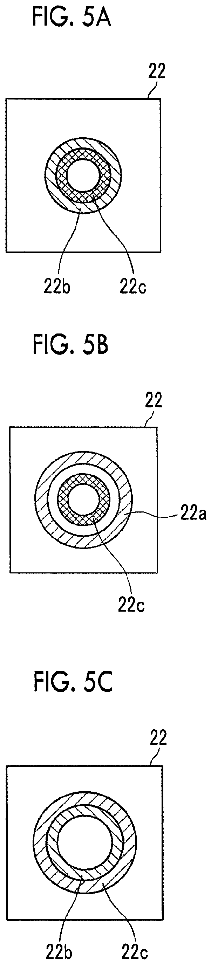

Specifically, in a case in which the red adjustment pattern 22a is not displayed and the green adjustment pattern 22b and the blue adjustment pattern 22c are displayed as shown in Fig. 5A, the direct light of green light and blue light of the light transmitted through the object S to be observed is absorbed and dimmed and the direct light of red light is transmitted. Accordingly, an image, which has the contrast of a phase-contrast image of light-blue light generated by the combination of green light and blue light and the color characteristics of a bright-field image of red light, is obtained.

Further, in a case in which the green adjustment pattern 22b is not displayed and the red adjustment pattern 22a and the blue adjustment pattern 22c are displayed as shown in Fig. 5B, the direct light of red light and blue light of the light transmitted through the object S to be observed is absorbed and dimmed and the direct light of green light is transmitted. Accordingly, an image, which has the contrast of a phase-contrast image of purple light generated by the combination of red light and blue light and the color characteristics of a bright-field image of green light, is obtained.

Furthermore, in a case in which the blue adjustment pattern 22c is not displayed and the red adjustment pattern 22a and the green adjustment pattern 22b are displayed as shown in Fig. 5C, the direct light of red light and green light of the light transmitted through the object S to be observed is absorbed and dimmed and the direct light of blue light is transmitted. Accordingly, an image, which has the contrast of a phase-contrast image of yellow light generated by the combination of red light and green light and the color characteristics of a bright-field image of blue light, is obtained.

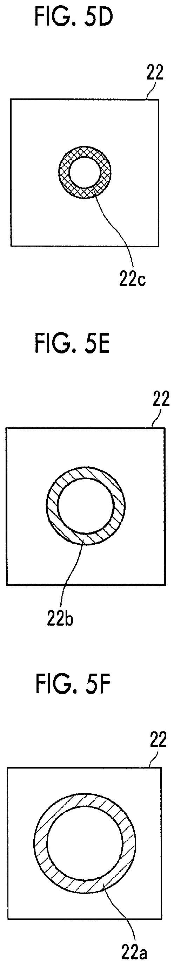

Moreover, in a case in which the red adjustment pattern 22a and the green adjustment pattern 22b are not displayed and only the blue adjustment pattern 22c is displayed as shown in Fig. 5D, the direct light of blue light of the light transmitted through the object S to be observed is absorbed and dimmed and the direct light of red light and green light is transmitted. Accordingly, an image, which has the contrast of a phase-contrast image of blue light and the color characteristics of a bright-field image of yellow light, is obtained.

Further, in a case in which the red adjustment pattern 22a and the blue adjustment pattern 22c are not displayed and only the green adjustment pattern 22b is displayed as shown in Fig. 5E, the direct light of green light of the light transmitted through the object S to be observed is absorbed and dimmed and the direct light of red light and blue light is transmitted. Accordingly, an image, which has the contrast of a phase-contrast image of green light and the color characteristics of a bright-field image of purple light, is obtained.

Furthermore, in a case in which the green adjustment pattern 22b and the blue adjustment pattern 22c are not displayed and only the red adjustment pattern 22a is displayed as shown in Fig. 5F, the direct light of red light of the light transmitted through the object S to be observed is absorbed and dimmed and the direct light of green light and blue light is transmitted. Accordingly, an image, which has the contrast of a phase-contrast image of red light and the color characteristics of a bright-field image of light-blue light as described above, is obtained.

Further, the same phase-contrast image as a phase-contrast image, which is obtained in a case in which a phase plate including a black slit in the related art is used, is taken in a case in which all the ranges of the red adjustment pattern 22a, the green adjustment pattern 22b, and the blue adjustment pattern 22c are displayed with a black color.

Returning to Fig. 1, direct light and diffracted light, which are transmitted through the transmission type display unit 22 and the phase plate 23, are incident on the image-forming lens 24, and the image-forming lens 24 forms images on the imaging unit 30 with the direct light and the diffracted light.

The imaging unit 30 includes an imaging element that takes an image formed by the image-forming lens 24. A charge-coupled device (CCD) image sensor, a complementary metal-oxide semiconductor (CMOS) image sensor, or the like is used as the imaging element. In this embodiment, the transmission type display unit 22 is adapted to adjust the transmission density of red light, green light, and blue light as described above. Accordingly, an imaging element that includes color filters formed of a red filter, a green filter, and a blue filter is used as the imaging element.

The microscope control device 40 is formed of a computer that includes a central processing unit (CPU) and a storage device.

Specifically, as shown in Fig. 1, the microscope control device 40 includes a transmission density control unit 41 that controls the transmission density of each color light by controlling the display of each pattern of the transmission type display unit 22, and a stage control unit 42 that controls the stage drive unit 62.

The transmission density control unit 41 receives information on the kind of a desired phase-contrast image set and input through the input device 55 by a user, and controls the display of each pattern of the transmission type display unit 22 on the basis of the information. Specifically, for example, a user sets and inputs a color, which serves as the base of a phase-contrast image, by using the input device 55. The color, which serves as the base of a phase-contrast image, is a color that allows transmission density to be relatively high in the transmission type display unit 22. For example, in a case in which the color, which serves as the base of a phase-contrast image, is to be set to a red color, the information on the color is set and input by a user. The transmission density control unit 41 controls the transmission type display unit 22 on the basis of the information on the color set and input by a user so that the transmission density for red light is relatively high. Specifically, the transmission density control unit 41 controls the transmission type display unit 22 so that the green adjustment pattern 22b and the blue adjustment pattern 22c are not displayed and only the red adjustment pattern 22a is displayed. In this way, the transmission density control unit 41 controls the display of each pattern of the transmission type display unit 22 according to the information on the color that is set and input by a user and serves as the base of a phase-contrast image.

Further, the microscope control device 40 controls the drive of the imaging element of the imaging unit 30, acquires an image signal output from the imaging element, and allows the display device 50 to display an image on the basis of the image signal.

The input device 55 and the display device 50 are connected to the microscope control device 40. The input device 55 includes an input device, such as a keyboard or a mouse, and receives an input of setting from a user. Particularly, the input device 55 of this embodiment receives an input of setting the information on the color that allows transmission density to be relatively high in the transmission type display unit 22 as described above. The input device 55 of this embodiment corresponds to a wavelength-selection receiving unit of the invention.

The display device 50 is formed of a display device, such as a liquid crystal display, and displays an image that is taken by the imaging unit 30, and the like. The display device 50 and the input device 55 may be formed of a touch panel so that the touch panel is used as both the display device 50 and the input device 55.

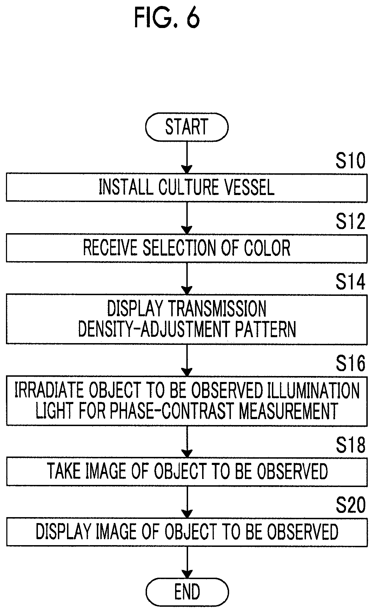

Next, the action of the microscope system of this embodiment will be described with reference to a flowchart illustrated in Fig. 6.

First, the culture vessel 60 in which the object S to be observed and the culture medium C are received is installed on the stage 61 (S10). Then, a user selects a color, which serves as the base of a phase-contrast image, and sets and inputs the color by using the input device 55 (S12).

Information on the color, which is set and input by a user and serves as the base of a phase-contrast image, is input to the transmission density control unit 41, and the transmission density control unit 41 allows the transmission type display unit 22 to display each color adjustment pattern on the basis of the input information on the color (S14).

Then, ring-shaped illumination light is emitted from the illumination light irradiation unit 10 and the object S to be observed of the culture vessel 60 is irradiated with the ring-shaped illumination light (S16).

Light, which is transmitted through the object S to be observed, is condensed by the second objective lens 21 and is incident on the transmission type display unit 22 and the phase plate 23.

A phase-contrast image of the object S to be observed is formed by the color of the adjustment pattern, which is displayed on the transmission type display unit 22, and the action of the phase plate 23, and bright-field images having colors of wavelengths other than a wavelength, which forms the phase-contrast image, are formed. Then, these images are formed on the imaging unit 30 by the image-forming lens 24, so that an image of the object S to be observed, which has the contrast of the phase-contrast image and the color characteristics of the bright-field images, is taken by the imaging unit 30 (S18).

An image signal of the image, which is taken by the imaging unit 30, is output to the microscope control device 40, and the microscope control device 40 allows the display device 50 to display the image of the object S to be observed on the basis of the input image signal (S20).

According to the microscope system of the embodiment, light, which is transmitted through the object S to be observed due to irradiation with illumination light for phase-contrast measurement, is incident on the transmission type display unit 22, patterns where transmission density varies for every light having a plurality of wavelengths included in the light transmitted through the object S to be observed are displayed on the transmission type display unit 22, and the object S to be observed is imaged by the detection of the light that is transmitted through the transmission type display unit 22 on which the pattern is displayed. Accordingly, since light having a wavelength where transmission density is relatively high is dimmed by the pattern, the same effects as phase-contrast observation can be obtained. Since light having a wavelength where transmission density is relatively low is not dimmed by the pattern, the same effects as bright-field observation can be obtained. That is, since the light transmitted through the transmission type display unit 22 is detected, an image in which both the color and the contrast of the object S to be observed are clear can be taken.

Various patterns shown in Figs. 5A to 5F can be displayed on the transmission type display unit 22 in the embodiment, but all these patterns may not necessarily be displayed and the display of any one of the patterns may be fixed. In this case, it is preferable that a pattern where the transmission density of light having a relatively short wavelength is higher than the transmission density of light having a relatively long wavelength is displayed. Since a diffraction angle is small and contrast can be made clearer in the case of light having a short wavelength, it is preferable that the transmission density of the light is increased to increase the contribution of the light to a phase-contrast image.

Specifically, it is preferable that a pattern where the transmission density of blue light is higher than the transmission densities of red light and green light is displayed. That is, it is preferable that the red adjustment pattern 22a and the green adjustment pattern 22b are not displayed and only the blue adjustment pattern 22c is displayed as shown in Fig. 5D.

Further, a user sets and inputs information on the color, which serves as the base of a phase-contrast image, in the embodiment, but the invention is not limited thereto. A table in which information on the kinds of an object S to be observed is associated with information on the kinds of patterns displayed on the transmission type display unit 22 is previously set in the transmission density control unit 41, and the pattern displayed on the transmission type display unit 22 is controlled on the basis of the information on the kind of the object S to be observed that is set and input by a user. Examples of the information on the kind of the object S to be observed include information on the kind of a cell, information on the kind of a reagent, such as alkaline phosphatase, and the like.

Furthermore, since there is a case where the degree of scattering of light in a cell varies according to the kind of the cell, the size of each color pattern displayed on the transmission type display unit 22 may be changed according to the information on the kind of the cell. Specifically, the diameter of each color pattern may be set to be larger as the degree of scattering of light in a cell is high.

Further, in the embodiment, the red adjustment pattern 22a, the green adjustment pattern 22b, and the blue adjustment pattern 22c are displayed at different positions in the shape of a concentric circle, respectively. However, the positions where these patterns are displayed may be set to the same position, and these patterns may be switched and displayed on the basis of information on a color that is set and input by a user.

Furthermore, in the embodiment, a phase-contrast observation mode and a bright-field observation mode can be set and input by a user, the transmission density control unit 41 may allow the transmission type display unit 22 to display a desired pattern and may allow the imaging unit 30 to take the phase-contrast image of the object S to be observed as described above in a case in which the phase-contrast observation mode is set and input, and the transmission density control unit 41 may allow the transmission type display unit 22 to display nothing and may allow the imaging unit 30 to take the bright-field image of the object S to be observed in a case in which the bright-field observation mode is set.

Moreover, in the embodiment, the transmission type display unit 22 displays the red adjustment pattern 22a, the green adjustment pattern 22b, and the blue adjustment pattern 22c, that is, displays patterns absorbing RGB (Red, Green, and Blue) light. However, the transmission type display unit 22 may display patterns that absorb cyan light, magenta light, and yellow light. In this case, a complementary color-based imaging element, which includes a cyan filter, a magenta filter, and a yellow filter, may be used as the imaging element.

Further, the object to be observed is irradiated with illumination light for phase-contrast measurement that is formed of white light in the embodiment, but the invention is not limited thereto. For example, an object to be observed, such as a cell, may be irradiated with illumination light for phase-contrast measurement that is formed of excitation light, and the fluorescence image of an object to be observed may be taken by the detection of fluorescence generated from a cell, fluorescence generated from a reagent, and the like.

### Explanation of References

10: illumination light irradiation unit
11: white light source
12: slit plate
12a: slit
12b: light screen
13: first objective lens
20: image-forming optical system
21: second objective lens
22: transmission type display unit
22a: red adjustment pattern
22b: green adjustment pattern
22c: blue adjustment pattern
23: phase plate
23a: phase ring
24: image-forming lens
30: imaging unit
40: microscope control device
41: transmission density control unit
42: stage control unit
50: display device
55: input device
60: culture vessel
61: stage
62: stage drive unit

## Claims

1. A microscope apparatus comprising:
an illumination light irradiation unit (10) that irradiates an object (S) to be observed with illumination light adapted for phase-contrast measurement, and wherein the illumination light forms an illumination pattern;
a transmission type display unit (22) on which light, which is transmitted through the object (S) to be observed due to irradiation with the illumination light for phase-contrast measurement, is incident, wherein the transmission type display unit (22) is configured to transmit white light in a range (22d) of the transmission type display unit (22) that is transparent to light that has all wavelengths included in the light transmitted through the object (S); and
a phase plate (23) provided on a surface of the transmission type display unit (22) opposite to the object (S) Sto be observed, wherein the phase plate (23) has a pattern that is adapted to shift the illumination light that has passed through the object (S) to be observed and is directly incident on the phase plate (23) by a quarter wavelength and is adapted not to change the phase of most of the diffracted light, which is diffracted by the object (S) to be observed;
wherein the illumination light has a pattern conjugated with the pattern of the phase plate (23);
wherein the transmission type display unit (22) is disposed at a position optically conjugated with the illumination light irradiation unit (10); **characterized in that** the transmission type display unit (22) displays patterns where transmission density varies for every light having a plurality of wavelengths included in the light transmitted through the object (S) to be observed, the displayed patterns comprising a red adjustment pattern (22a) configured to adjust the transmission density of red light, a green adjustment pattern (22b) configured to adjust the transmission density of green light, and a blue adjustment pattern (22c) configured to adjust transmission density of blue light and displayed in the portion of the transmission type display unit (22) other than the range (22d), the adjustment patterns (22a-22c) each having a shape corresponding to the illumination pattern.

2. The microscope apparatus according to claim 1,
wherein the transmission type display unit (22) displays the patterns, which correspond to the every light having the plurality of wavelengths, at different positions, respectively.

3. The microscope apparatus according to claim 2,
wherein the transmission type display unit (22) displays the patterns, which correspond to the every light having the plurality of wavelengths, in the shape of a concentric circle.

4. The microscope apparatus according to any one of claims 1 to 3,
wherein the transmission type display unit (22) displays a pattern where transmission density of light having a relatively short wavelength is higher than transmission density of light having a relatively long wavelength.

5. The microscope apparatus according to claim 4,
wherein the transmission type display unit (22) displays a pattern where transmission density of blue light is higher than transmission densities of red light and green light.

6. The microscope apparatus according to any one of claims 1 to 5, further comprising:
a wavelength-selection receiving unit that receives selection of light having a wavelength allowing transmission density to be relatively high,
wherein the transmission type display unit (22) changes the transmission density of light, which has each of the wavelengths of the patterns, according to the light having the wavelength received by the wavelength-selection receiving unit.

7. The microscope apparatus according to any one of claims 1 to 6,
wherein the light having the plurality of wavelengths is red light, green light, and blue light.

8. The microscope apparatus according to any one of claims 1 to 7,
wherein the transmission type display unit (22) has a phase-contrast observation mode in which the patterns are displayed and a bright-field observation mode in which the patterns are not displayed.

9. The microscope apparatus according to claim 8,
wherein the transmission type display unit (22) displays a pattern that blocks light having all wavelengths included in the illumination light for phase-contrast measurement in a case of the phase-contrast observation mode.

10. The microscope apparatus according to any one of claims 1 to 9,
wherein the pattern is a ring-shaped pattern.

11. The microscope apparatus according to any one of claims 1 to 10, further comprising:
a phase changing unit on which light, which is transmitted through the object to be observed due to irradiation with the illumination light for phase-contrast measurement, is incident and which shifts a phase of the incident light.

12. An image forming method comprising:
irradiating an object to be observed with illumination light adapted for phase-contrast measurement, wherein the illumination light forms an illumination pattern;
allowing light, which is transmitted through the object to be observed due to irradiation with the illumination light for phase-contrast measurement, to be incident on a transmission type display unit (22), wherein the transmission type display unit is configured to transmit white light in a range (22d) of the transmission type display unit (22) that is transparent to light that has all wavelengths included in the light transmitted through the object;
allowing light, which is transmitted through the transmission type display unit, to be incident on a phase plate (23) provided on a surface of the transmission type display unit opposite to the object S to be observed, wherein the phase plate has a pattern that is adapted to shift the illumination light that has passed through the object to be observed and is directly incident on the phase plate by a quarter wavelength and is adapted not to change the phase of most of the diffracted light, which is diffracted by the object S to be observed;
allowing the transmission type display unit (22) to display patterns where transmission density varies for every light having a plurality of wavelengths included in the light transmitted through the object to be observed, the displayed patterns comprising a red adjustment pattern (22a) configured to adjust the transmission density of red light, a green adjustment pattern (22b) configured to adjust the transmission density of green light, and a blue adjustment pattern (22c) configured to adjust transmission density of blue light and displayed in the portion of the transmission type display unit (22) other than the range (22d), the adjustment patterns (22a-22c) each having a shape corresponding to the illumination pattern; and
forming images with the light transmitted through the transmission type display unit (22) on which the pattern is displayed;
wherein the illumination light has a pattern conjugated with the pattern of the phase plate; and
wherein the transmission type display unit (22) is disposed at a position optically conjugated with the illumination light irradiation unit (10).

## Patentansprüche

1. Mikroskopvorrichtung, umfassend:
eine Beleuchtungslicht-Aufstrahleinheit (10), die ein zu betrachtendes Objekt (S) mit Beleuchtungslicht bestrahlt, geeignet für eine Phasenkontrastmessung, wobei das Beleuchtungslicht ein Beleuchtungsmuster bildet;
eine Transmissions-Anzeigeeinheit (22), auf der Licht, welches durch das zu betrachtende Objekt (S) aufgrund der Bestrahlung mit dem Beleuchtungslicht für eine Phasenkontrastmessung hindurchgegangen ist, auftrifft, wobei die Transmissions-Anzeigeeinheit (22) konfiguriert ist zum Durchlassen von weißem Licht in einem Bereich (22d) der Transmissions-Anzeigeeinheit (22), die für Licht sämtlicher Wellenlängen, die in dem durch das Objekt (S) hindurchgegangenen Licht enthalten sind, transparent ist; und
eine Phasenplatte (23), angeordnet auf einer Oberfläche der Transmissions-Anzeigeeinheit (22) abgewandt von dem zu betrachtenden Objekt (S), wobei die Phasenplatte (23) ein Muster aufweist, ausgebildet zum Verschieben des durch das zu betrachtende Objekt (S) hindurchgegangenen Beleuchtungslichts, das direkt auf die Phasenplatte (23) auftrifft, um eine Viertelwellenlänge, und ausgebildet ist, die Phase von am meisten gebeugtem Licht nicht zu ändern, welches von dem zu betrachtenden Objekt (S) gebeugt wird;
wobei das Beleuchtungslicht ein mit dem Muster der Phasenplatte (23) konjugiertes Muster besitzt;
wobei die Transmissions-Anzeigeeinheit (22) sich an einer Stelle befindet, die mit der Beleuchtungslicht-Aufstrahleinheit (10) optisch konjugiert ist;
**dadurch gekennzeichnet, dass** die Transmissions-Anzeigeeinheit (22) Muster anzeigt, wobei die Transmissionsdichte für jegliches Licht mit einer Mehrzahl von Wellenlängen in dem durch das zu betrachtende Objekt (S) hindurchgegangenen Licht variiert, die angezeigten Muster ein Rot-Einstellmuster (22a) aufweisen, konfiguriert zum Einstellen der Transmissionsdichte von rotem Licht, ein Grün-Einstellmuster (22b) aufweisen, konfiguriert zum Einstellen der Transmissionsdichte von grünem Licht, und ein Blau-Einstellmuster (22c) aufweisen, konfiguriert zum Einstellen der Transmissionsdichte von blauem Licht, angezeigt in dem Bereich der Transmissions-Anzeigeeinheit (22) verschieden von dem Bereich (22d), wobei die Einstellmuster (22a-22c) jeweils eine Form haben, die dem Beleuchtungsmuster entspricht.

2. Mikroskopvorrichtung nach Anspruch 1,
bei der die Transmissions-Anzeigeeinheit (22) die Muster, welche genau dem Licht mit den mehreren Wellenlängen entsprechen, an unterschiedlichen Stellen anzeigt.

3. Mikroskopvorrichtung nach Anspruch 2,
bei der die Transmissions-Anzeigeeinheit (22) die Muster, die genau dem Licht mit den mehreren Wellenlängen entsprechen, in Form eines konzentrischen Kreises anzeigt.

4. Mikroskopvorrichtung nach einem der Ansprüche 1 bis 3,
bei der die Transmissions-Anzeigeeinheit (22) ein Muster anzeigt, bei dem die Transmissionsdichte von Licht mit einer relativ kurzen Wellenlänge höher ist als die Transmissionsdichte von Licht mit einer relativ langen Wellenlänge.

5. Mikroskopvorrichtung nach Anspruch 4,
bei der die Transmissions-Anzeigeeinheit (22) ein Muster anzeigt, bei dem die Transmissionsdichte von blauem Licht höher ist als die Transmissionsdichte von rotem Licht und grünem Licht.

6. Mikroskopvorrichtung nach einem der Ansprüche 1 bis 5, weiterhin umfassend:
eine Wellenlängenauswahl-Empfangseinheit, die eine Auswahl von Licht mit einer Wellenlänge empfängt, die eine relativ hohe Transmissionsdichte gestattet,
wobei die Transmissions-Anzeigeeinheit (22) die Transmissionsdichte von Licht, welches jede der Wellenlängen der Muster enthält, nach Maßgabe von Licht ändert, welches die von der Wellenlängenauswahl-Empfangseinheit empfangenen Wellenlänge aufweist.

7. Mikroskopvorrichtung nach einem der Ansprüche 1 bis 6,
bei der das Licht mit den mehreren Wellenlängen rotes Licht, grünes Licht und blaues Licht ist.

8. Mikroskopvorrichtung nach einem der Ansprüche 1 bis 7,
bei der die Transmissions-Anzeigeeinheit (22) einen Phasenkontrast-Betrachtungsmodus aufweist, bei dem die Muster angezeigt werden, und einen Hellfeld-Betrachtungsmodus aufweist, bei dem die Muster nicht angezeigt werden.

9. Mikroskopvorrichtung nach Anspruch 8,
bei der die Transmissions-Anzeigeeinheit (22) ein Muster anzeigt, welches Licht mit sämtlichen in dem Beleuchtungslicht für eine Phasenkontrastmessung enthaltenen Wellenlängen im Fall des Phasenkontrast-Betrachtungsmodus sperrt.

10. Mikroskopvorrichtug nach einem der Ansprüche 1 bis 9,
bei dem das Muster ein ringförmiges Muster ist.

11. Mikroskopvorrichtung nach einem der Ansprüche 1 bis 10, weiterhin umfassend:
eine Phasenänderungseinheit, an welcher Licht, das durch das zu betrachtende Objekt hindurchgegangen ist aufgrund der Bestrahlung mit dem Beleuchtungslicht für Phasenkontrastmessung, auftrifft, und die eine Phase des auftreffenden Lichts verschiebt.

12. Bilderzeugungsverfahren, umfassend:
Bestrahlen eines zu betrachtenden Objekts mit Beleuchtungslicht, das ausgebildet ist für eine Phasenkontrastmessung, wobei das Beleuchtungslicht ein Beleuchtungsmuster bildet,
Ermöglichen, dass Licht, welches durch das zu betrachtende Objekt aufgrund der Bestrahlung mit dem Beleuchtungslicht für die Phasenkontrastmessung hindurchgeht, auf eine Transmissions-Anzeigeeinheit (22) auftrifft, wobei die Transmissions-Anzeigeeinheit konfiguriert ist zum Durchlassen von weißem Licht in einem Bereich (22d) der Transmissions-Anzeigeeinheit (22), die transparent ist für Licht, das sämtliche Wellenlängen aufweist, die in dem durch das Objekt hindurchgegangenen Licht enthalten sind,
Ermöglichen, dass Licht, welches durch die Transmissions-Anzeigeeinheit hindurchgegangen ist, auf eine Phasenplatte (23) auf einer Oberfläche der Transmissions-Anzeigeeinheit abgewandt von dem zu betrachtenden Objekt S auftrifft, wobei die Phasenplatte ein Muster aufweist, das ausgebildet ist zum Verschieben des Beleuchtungslichts, das durch das zu beleuchtende Objekt hindurchgegangen ist, und direkt auf die Phasenplatte auftrifft, um eine Viertelwellenlänge zu verschieben, und ausgebildet ist, die Phase des meisten von dem gebeugten Licht, das von dem zu betrachtenden Objekt S gebeugt wird, nicht zu ändern;
Ermöglichen, dass die Transmissions-Anzeigeeinheit (22) Muster anzeigt, wobei die Transmissionsdichte für jegliches Licht mit einer Mehrzahl von Wellenlängen in dem durch das zu betrachtenden Objekt hindurchgegangenen Licht variiert, wobei die anzeigten Muster ein Rot-Einstellmuster (22a) aufweisen, konfiguriert zum Einstellen der Transmissionsdichte von rotem Licht, ein Grün-Einstellmuster (22b) aufweisen, konfiguriert zum Einstellen der Transmissionsdichte von grünem Licht und ein Blau-Einstellmuster (22c) aufweisen, konfiguriert zum Einstellen der Transmissionsdichte von blauem Licht, und in dem Bereich der Transmissions-Anzeigeeinheit (22) verschieden von dem Bereich (22d) anzuzeigen, wobei die Einstellmuster (22a-22c) jeweils eine Form entsprechend dem Beleuchtungsmuster aufweisen; und
Bilden von Bildern mit dem durch die Transmissions-Anzeigeeinheit (22) hindurchgegangenen Licht, auf welchem das Muster angezeigt wird;
wobei das Beleuchtungslicht ein mit dem Muster der Phasenplatte konjugiertes Muster besitzt; und
wobei die Transmissions-Anzeigeeinheit (22) an einer Stelle angeordnet ist, die bezüglich der Beleuchtungslicht-Aufstrahleinheit (10) konjugiert ist.

## Revendications

1. Appareil formant microscope, comprenant :
une unité d'irradiation par lumière d'éclairage (10), laquelle irradie un objet (S) à observer avec une lumière d'éclairage apte pour une mesure par contraste de phase, et dans lequel la lumière d'éclairage forme un motif d'éclairage ;
une unité d'affichage de type à transmission (22), sur laquelle la lumière est incidente, laquelle est transmise à travers l'objet (S) à observer suite à l'irradiation avec la lumière d'éclairage pour une mesure par contraste de phase, dans lequel l'unité d'affichage de type à transmission (22) est configurée pour transmettre une lumière blanche dans une plage (22d) de l'unité d'affichage de type à transmission (22), laquelle est transparente à la lumière, laquelle présente toutes les longueurs d'ondes incluses dans la lumière transmise à travers l'objet (S), et
une lame de phase (23) prévue sur une surface de l'unité d'affichage de type à transmission (22) en face de l'objet (S) à observer, dans lequel la lame de phase (23) présente un motif, lequel est apte à décaler la lumière d'éclairage, laquelle a traversé l'objet (S) à observer et est directement incidente sur la lame de phase (23) à raison d'un quart de longueur d'onde et est apte à ne pas modifier la phase de la plupart de la lumière diffractée, laquelle est diffractée par l'objet (S) à observer ;
dans lequel la lumière d'éclairage présente un motif conjugué avec le motif de la lame de phase (23) ;
dans lequel l'unité d'affichage de type à transmission (22) est disposée sur une position conjuguée de manière optique avec l'unité d'irradiation par lumière d'éclairage (10) ; **caractérisé en ce que** l'unité d'affichage de type à transmission (22) affiche des motifs où la densité de transmission varie pour chaque lumière présentant une pluralité de longueurs d'onde incluses dans la lumière transmise à travers l'objet (S) à observer, les motifs affichés comprenant un motif de réglage du rouge (22a) configuré pour régler la densité de transmission de la lumière rouge, un motif de réglage du vert (22b) configuré pour régler la densité de transmission de la lumière verte, et un motif de réglage du bleu (22c) configuré pour régler la densité de transmission de la lumière bleue, et affichés dans la portion de l'unité d'affichage de type à transmission (22) autre que la plage (22d), les motifs de réglage (22a-22c) présentant chacun une forme correspondant au motif d'éclairage.

2. Appareil formant microscope selon la revendication 1,
dans lequel l'unité d'affichage de type à transmission (22) affiche les motifs, lesquels correspondent respectivement à chaque lumière présentant la pluralité de longueurs d'onde, sur des positions différentes.

3. Appareil formant microscope selon la revendication 2,
dans lequel l'unité d'affichage de type à transmission (22) affiche les motifs, lesquels correspondent à chaque lumière présentant la pluralité de longueurs d'onde, sous la forme d'un cercle concentrique.

4. Appareil formant microscope selon l'une quelconque des revendications 1 à 3,
dans lequel l'unité d'affichage de type à transmission (22) affiche un motif où la densité de transmission de lumière présentant une longueur d'onde relativement courte est supérieure à une densité de transmission de lumière présentant une longueur d'onde relativement longue.

5. Appareil formant microscope selon la revendication 4,
dans lequel l'unité d'affichage de type à transmission (22) affiche un motif où la densité de transmission de la lumière bleue est supérieure aux densités de transmission de la lumière rouge et de la lumière verte.

6. Appareil formant microscope selon l'une quelconque des revendications 1 à 5, comprenant en outre :
une unité de réception de sélection de longueur d'onde, laquelle reçoit une sélection de lumière présentant une longueur d'onde permettant d'obtenir une densité de transmission relativement élevée,
dans lequel l'unité d'affichage de type à transmission (22) modifie la densité de transmission de la lumière, laquelle présente chacune des longueurs d'onde des motifs, conformément à la lumière présentant la longueur d'onde reçue par l'unité de réception de sélection de longueur d'onde.

7. Appareil formant microscope selon l'une quelconque des revendications 1 à 6,
dans lequel la lumière présentant la pluralité de longueurs d'onde est la lumière rouge, la lumière verte, et la lumière bleue.

8. Appareil formant microscope selon l'une quelconque des revendications 1 à 7,
dans lequel l'unité d'affichage de type à transmission (22) présente un mode d'observation par contraste de phase où les motifs sont affichés et un mode d'observation sur fond clair où les motifs ne sont pas affichés.

9. Appareil formant microscope selon la revendication 8,
dans lequel l'unité d'affichage de type à transmission (22) affiche un motif, lequel bloque la lumière présentant toutes les longueurs d'onde incluses dans la lumière d'éclairage pour une mesure par contraste de phase dans un cas de mode d'observation par contraste de phase.

10. Appareil formant microscope selon l'une quelconque des revendications 1 à 9,
dans lequel le motif est un motif en forme d'anneau.

11. Appareil formant microscope selon l'une quelconque des revendications 1 à 10, comprenant en outre :
une unité de modification de phase, sur laquelle la lumière, laquelle est transmise à travers l'objet à observer suite à l'irradiation avec la lumière d'éclairage pour mesure par contraste de phase, est incidente, et laquelle décale une phase de la lumière incidente.

12. Procédé de formation d'image, comprenant les étapes suivantes :
irradier un objet à observer avec une lumière d'éclairage apte à une mesure par contraste de phase, dans lequel la lumière d'éclairage forme un motif d'éclairage ;
faire en sorte qu'une lumière, laquelle est transmise par le biais de l'objet à observer due à l'irradiation avec la lumière d'éclairage pour une mesure par contraste de phase, soit incidente sur une unité d'affichage de type à transmission (22), dans lequel l'unité d'affichage de type à transmission est configurée pour transmettre une lumière blanche dans une plage (22d) de l'unité d'affichage de type à transmission (22), laquelle est transparente à la lumière, laquelle présente toutes les longueurs d'ondes incluses dans la lumière transmise par le biais de l'objet, et
faire en sorte qu'une lumière, laquelle est transmise par le biais de l'unité d'affichage de type à transmission, soit incidente sur une lame de phase (23) prévue sur une surface de l'unité d'affichage de type à transmission en face de l'objet (S) à observer, dans lequel la lame de phase présente un motif, lequel est apte à décaler la lumière d'éclairage, laquelle a traversé l'objet à observer et est directement incidente sur la lame de phase à raison d'un quart de longueur d'onde et est apte à ne pas modifier la phase de la plupart de la lumière diffractée, laquelle est diffractée par l'objet (S) à observer ;
faire en sorte que l'unité d'affichage de type à transmission (22) affiche des motifs où la densité de transmission varie pour chaque lumière présentant une pluralité de longueurs d'onde incluses dans la lumière transmise à travers l'objet à observer, les motifs affichés comprenant un motif de réglage du rouge (22a) configuré pour régler la densité de transmission de la lumière rouge, un motif de réglage du vert (22b) configuré pour régler la densité de transmission de la lumière verte, et un motif de réglage du bleu (22c) configuré pour régler la densité de transmission de la lumière bleue, et affichés dans la portion de l'unité d'affichage de type à transmission (22) autre que la plage (22d), les motifs de réglage (22a-22c) présentant chacun une forme correspondant au motif d'éclairage, et
former des images avec la lumière transmise par le biais de l'unité d'affichage de type à transmission (22), sur laquelle le motif est affiché ;
dans lequel la lumière d'éclairage présente un motif conjugué avec le motif de la lame de phase, et
dans lequel l'unité d'affichage de type à transmission (22) est disposée sur une position conjuguée de manière optique avec l'unité d'irradiation par lumière d'éclairage (10).
